**Europäisches Patentamt**

**European Patent Office**

**Office européen des brevets**

(19)

(11) Publication number: **0 048 636**
**B1**

(12) **EUROPEAN PATENT SPECIFICATION**

(45) Date of publication of patent specification: **25.07.84**

(21) Application number: **81304421.1**

(22) Date of filing: **24.09.81**

(51) Int. Cl.³: **G 03 G 15/30,**
**G 03 B 27/50**

(54) Precession scanning apparatus.

(30) Priority: **24.09.80 US 190110**

(43) Date of publication of application:
**31.03.82 Bulletin 82/13**

(45) Publication of the grant of the patent:
**25.07.84 Bulletin 84/30**

(84) Designated Contracting States:
**DE GB**

(56) References cited:
**GB - A - 1 477 163**
**GB - A - 1 548 355**
**GB - A - 1 554 061**
**GB - A - 1 566 410**
**US - A - 3 497 298**
**US - A - 3 841 753**

(73) Proprietor: **XEROX CORPORATION**
**Xerox Square - 020**
**Rochester New York 14644 (US)**

(72) Inventor: **Shogren, David K.**
**776 Lake Road**
**Ontario New York 14519 (US)**

(74) Representative: **Goode, Ian Roy et al,**
**European Patent Attorney c/o Rank Xerox Limited**
**Patent Department 338 Euston Road**
**London NW1 3BH (GB)**

Courier Press, Leamington Spa, England.

## Description

This invention relates to a scanning apparatus for scanning a document placed on a flat platen and projecting an image of said document at substantially unity magnification onto the surface of a photoreceptor drum, said apparatus comprising illumination scanning means for scanning said document including means to move said scanning means from a start-of-scan to an end-of-scan position at a first velocity $V_s$, projection means positioned along the system optical path and arranged to project images reflected from said document during said scanning towards said photoreceptor drum, reflector means positioned between said projection means and said photoreceptor drum, and means for rotating said photoreceptor drum so that its surface moves at a second velocity $V_D$. An apparatus of this kind is described in GB—A—1548355.

Precision scan systems which expose images on a photoreceptor at a fster rate than the photoreceptor movement are known in the art. US—A—3,454,335 (Caldwell) discloses a method of projecting images on microfilm cards which are moved past a stationary lens and mirror system onto a drum photoreceptor. The drum and microfilm are moved at the same speed but the image is precessed (moved in a direction opposite to the drum motion) onto the drum surface by means of a slit aperture which moves in a direction opposite that of the drum. This combined slit and drum motion exposes the drum at a speed (rate) that is greater than the surface speed of the drum.

Another prior art device which utilizes precision onto a drum photoreceptor is disclosed in US—A—3,650,621 (Lewis). Lewis discloses a system wherein an image device is moved in an arcuate path which is in a direction opposite to drum rotation to scan a document on a curved platen onto the drum. Precision onto a flat photoreceptor surface is disclosed in US—A—3,754,822 (Melrose).

The above disclosed scanning systems demonstrate two of the advantages gained by image precission: the process speed of the system can be set at a lower speed, for equivalent copy rate (copies per minute) and the gap ordinarily present between images (due to the return time of the scan optics) can be reduced or eliminated if desired. Scan return velocities for a given copy can also be minimised thus reducing scan accelerations, forces and vibrations.

A problem with utilzing a precission scan system with a curved or drum-type photoreceptor, however, is that defocusing errors may result in developed images unacceptable for some systems. The errors are introduced because the image reflected from the drum mirror to the slit does not maintain perpendicularity to a tangential line at the drum surface. An example of this lack of perpendicularity in a precessing slit system is to be found in US—A—3 454 335, where the processing slit is used in conjunction with an input light beam of constant direction. The defocusing problem which arises in such a precessing slit system is addressed in European Patent Application Publication No. 0017326. The problem of field tilt in this particular scan system is solved by using linear and rotational motions of optical elements located near the drum surface to scan the image onto the drum at the angle corresponding to the angle of reflection of the image from the platen.

GB—A—1548355 describes a scanning system for a multiple magnification mode copying apparatus in which the image beam projected onto the photoreceptor drum is maintained in an optical path normal to the drum surface. This is done by tilting a mirror, which reflects the image beam onto the drum, to different angles.

The present invention is intended to provide a scanning apparatus which precesses an image of a document onto a curved photoreceptor surface, especially in a full-rate, half-rate scan system, in which the image is well-focussed throughout its area.

The scanning apparatus of the invention is characterised in that the surface velocity $V_D$ of the photoreceptor drum is less than the velocity $V_s$ of the scanning means, and in that said reflector means is adapted to move along an arcuate path about the drum axis so as to precess the projected images onto and along the surface of said photoreceptor drum in a direction opposite to the motion of said surface and at a process velocity $V_p$ equal to $V_s$—$V_D$, said reflector means being pivotally mounted to maintain the incident axis of projected images substantially perpendicular to the photoreceptor surface during said scanning.

For a better understanding of the present invention, reference may be had to the accompanying drawing which shows a precission scan apparatus according to the invention utilizing a dual rate illuminator scan system.

Referring now to the drawing, there is shown a scanning system 10 comprising a flat platen 12 having on its surface a document 13 whose length is successively scanned by lamp/reflector assembly 14. Placed along optical path 16 are a full-rate scan mirror 18, half-rate mirror 20, lens 22, folding mirror 24 and a mirror 26 mounted adjacent the drum 28.

The document image is projected onto the surface of drum photoreceptor 28 in a precession mode by driving scan mirror and lamp-reflector assembly at a scan rate which is set at some value greater than the rotational speed (process speed) of drum 28. As the drum rotates in the clockwise directon indicated, the scanned and projected image is reflected onto the drum surface by mirror 26 which is simultaneously moving in a counterclockwise

direction to maintain its incident axis 30 perpendicular to the drum surface.

In operation, mirrors 18, 20 are moved by means not shown from a start-of-scan position (solid line) to an end-of-scan position (dotted line).

In operation, and at start-of-scan, elements 14, 18, 20, 24 and 26 are in the solid-line positions. Drum 28 is rotating in the clockwise direction at a velocity $V_D$. A portion AC of drum is equal in length to line $P_1P_2$ defining the document size parallel to the length of scan with point C representing the image point of document point $P_1$. Mirror 18 and assembly 14 are translated from left to right by means not shown at a velocity $V_s$ which is purposely made larger than drum velocity $V_D$. Mirror 20 moves at a velocity $V_s/2$. A reflected image of the scanned portion of the document, represented by a principal ray travelling along the optical axis, is imaged through lens 22, folded by mirror 24 and reflected from drum mirror 26 to point C on the drum surface. Mirror 26 is positioned at start of scan so as to have incident axis 30 perpendicular to a tangent to the drum surface at point C.

As the scanning proceeds from left to right, the image reflected to the drum surface begins to advance along the surface in a counterclockwise direction due to the ratio of scan to process speed. If mirror 26 were simply pivoted in a stationary position, the incident axis would begin to deviate from the required perpendicularity condition introducing a field tilt defocusing error. Mirror 26 is therefore simultaneously rotated about the center point of the drum at a speed sufficient to maintain axis 30 in the perpendicular condition. This velocity is equivalent to the processing rate $V_p$. Mirror 24 is also simultaneously translated to maintain the required lens-to-image conjugate distance.

Thus, at the end of scan position, mirrors 26 and 24 have moved to the dotted positions maintaining incident axis 30' perpendicular to the drum surface. Drum 28 has rotated a distance CD and point B is therefore the imaged point corresponding to object $P_2$ and distance BC represents the precession distance. The time taken by point B to advance to start-of-scan position C is now "free" time which is available to return scan mirror 18, and mirror 20 to start-of-scan position. Mirrors 26 and 24 are also returned to their initial start positions during the interval.

To summarize the above operation, an image of document 13 has been formed on the surface of drum 28 along a length represented by AC. The image was formed by laying down the image along this length at a rate faster than the rate of rotation of the drum surface and in an opposing direction, i.e. the image was precessed a distance BC. The ratio of scan speed $V_s$ to drum (i.e. process) speed $V_D$ was set to obtain the precession distance BC. The rate of laying down the precesed image, when algebraically combined with scan speed equals the process speed, i.e. $V_s + (-Vp) = V_D$. Dividing precession distance BC by process speed $V_D$ provides the amount of "free" flyback time available for the particular system.

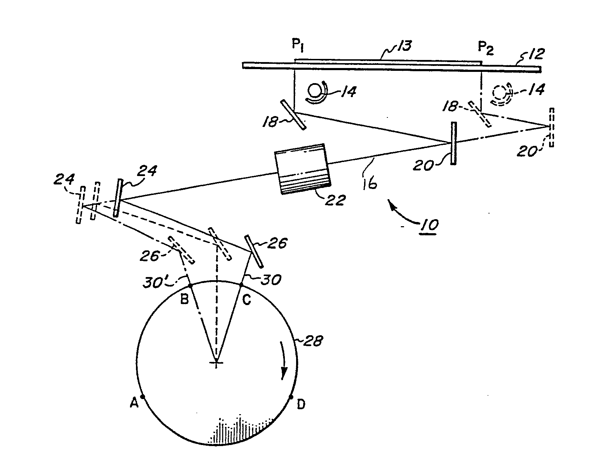

A specific example of a scan system operating in the manner shown in Figure 1 is as follows:—

| | |
|---|---|
| scan velocity $V_s$ | = 23 cm/sec |
| drum velocity $V_{.d}$ | = 13 cm/sec |
| document size ($P_1P_2$=AC) | = 23 cm |
| magnification 1:1 | |

In these circumstances, the document is scanned in 1 second. During this time, the drum rotates through 13 cm, and the image at the drums surface is precessed by a further 10 cm, giving a total image length of 23 cm, the same as the original document.

In order to optimise flyback time (the condition where the time taken for point B to rotate to point C equals the time taken for the scan components to return to start of scan position) the flyback time is made equal to the precession distance (10 cm) divided by the drum velocity (13 cm/sec), i.e. 10/13 second.

It is therefore evident from the above description, that the present scanning system provides a simple implemented precession system for a dual-rate scan arrangement.

The "free" time gained by precessing the image can be used to return the scan components thereby optimizing copy output. The "free" time is also available to change documents either manually or by automatic document handling. The interdocument gap normally present between exposed images on the drum can be minimized or completely eliminated.

Although the present invention has been disclosed in the environment of a dual-rate mirror scan system, other types of scanning systems may be employed. For example, a single mirror with related scan lamp assembly could be used in systems having sufficient interior space requirements. Also, folding mirror 24 may not be necessary in a system having sufficient space.

**Claims**

1. A scanning apparatus for scanning a document (13) placed on a flat platen (12) and projecting an image of said document at substantially unity magnification onto the surface of a photoreceptor drum (28), said apparatus comprising

illumination scanning means (14, 18 for scanning said document including means to move said scanning means from a start-of-scan to an end-of-scan position at a first velocity $V_s$,

projection means (22) positioned along the system optical path (16) and arranged to project images reflected from said document during said scanning towards said photoreceptor drum,

reflector means (26) positioned between said projection means (22) and said photoreceptor drum (28), and

means for rotating said photoreceptor drum (28) so that its surface moves at a second velocity $V_D$,

characterised in that $V_D$ is less than $V_s$, and in that said reflector means is adapted to move along an arcuate path about the drum axis so as to precess the projected images onto and along the surface of said photoreceptor drum in a direction opposite to the motion of said surface and at a precess velocity $V_p$ equal to $V_s$—$V_D$, said reflector means (26) being pivotally mounted to maintain the incident axis (30) of projected images substantially perpendicular to the photoreceptor surface during said scanning.

2. The scanning apparatus of claim 1 wherein said scanning means (14, 18) comprises an illumination source (14) and scan mirror (18) which simultaneously scan said document (13) in a linear direction parallel to said document.

3. The scanning apparatus of claim 1 wherein said scanning means (14, 18) includes an illumination source (14) and scan mirror (18) connected as an assembly to move at said velocity $V_s$, and wherein the apparatus includes a second mirror (20) moving at a velocity $V_s/2$ to maintain a constant distance between the document and the projection means.

4. The scanning apparatus of any one of claims 1 to 3 including a further reflector means (24) positioned along the optical path between said projection means (22) and said reflector means (26), said further reflector means (24) being arranged to fold the optical path and being adapted for movement during scan to maintain a constant conjugate distance between the projection means and the photoreceptor drum.

5. The scanning apparatus of claim 1 wherein a distance $D_p$ precessed on the drum surface is defined by the expression:

$$D_p = m\, L_D—V_D\, T_s \text{ where}$$

$$m = \text{system magnification}$$

$$L_D = \text{length of document scanned}$$

$$T_s = \text{scanning time} \left( \frac{L_d}{V_s} \right)$$

and wherein the time $T_r$ taken to return said scanning means from end-of scan to start-of-scan position is at most equal to the time taken by said drum surface to travel said distance $D_p$.

**Revendications**

1. Appareil de balayage pour balayer un document (13) placé sur une platine plate (12) et projeter égal à un sur la surface d'un tambour photorécepteur (28), cet appareil comprenant:

— un moyen de balayage par éclairage (14, 18) pour balayer le document comprenant un moyen pour déplacer le moyen de balayage entre une position de commencement de balayage et une position de fin de balayage à une première vitesse $V_s$,

— un moyen de projection (22) placé le long du trajet optique (16) du système et disposé de manière à projeter des images réfléchies par le document pendant le balayage vers le tambour photorécepteur;

— un moyen de réflecteur (26) placé entre le moyen de projection (22) et le tambour photorécepteur (28), et

— un moyen pour faire tourner le tambour photorécepteur (28) de manière que sa surface se déplace à une seconde vitesse $V_D$;

caractérisé en ce que $V_D$ est inférieur à $V_s$, et en ce que le moyen de réflecteur est destiné à se déplacer suivant un trajet en forme d'arc autour de l'axe du tambour de manière à provoquer une précession des images projetées sur et lelong de la surface du tambour photorécepteur dans une direction opposée au mouvement de la surface et à une vitesse de précession $V_p$ égal à $V_s$—$V_D$, le moyen de réflecteur (26) étant monté en pivotement de manière à maintenir l'axe incident (30) des images projetées sensiblement perpendiculaire à la surface du photorécepteur pendant le balayage.

2. Appareil de balayage selon la revendication 1, caractérisé en ce que le moyen de balayage (14, 18) comprend une source d'éclairage (14) et un miroir de balayage (18) qui procèdent simultanément au balayage du document (13) dans une direction linéaire parallèle au document.

3. Appareil de balayage selon la revendication 1, caractérisé en ce que le moyen de balayage (14, 18) comprend une source d'éclairage (14) et un miroir de balayage (18) reliés en tant qu'ensemble de manière à se déplacer à la vitesse $V_s$, et en ce que l'appareil comprend un second miroir (20) se déplaçant à une vitesse $V_s/2$ de manière à maintenir une distance constante entre le document et le moyen de projection.

4. Appareil de balayage selon l'une quelconque des revendications 1 à 3 comprenant un autre moyen de réflecteur (24) placé le long du trajet optique entre le moyen de projection (22) et le moyen de réflecteur (26), cet autre moyen de réflecteur (24) étant disposé de manière à faire plier le trajet optique et étant destiné à se déplacer pendant le balayage pour maintenir une distance conjuguée constante entre le moyen de projection et le tambour photorécepteur.

5. Appareil de balayage selon la revendication 1, caractérisé en ce qu'une distance $D_p$ due à une précession sur la surface du tambour est définie par l'expression:

$$D_p = mL_d - V_D T_s \text{ où}$$

$$m = \text{grossissement du système}$$

$$L_D = \text{longueur du document balayé}$$

$$T_s = \text{temps de balayage} \left(\frac{L_D}{V_s}\right)$$

et où le temps $T_r$ mis pour ramener le moyen de balayage de la position de début de balayage à la position de fin de balayage est au plus égal au temps que met la surface du tambour pour parcourir la distance $D_p$.

**Patentansprüche**

1. Abtastvorrichtung zum Abtasten eines auf einer ebenen Platte (12) angeordneten Dokumentes (13) und zum Projizieren eines Abbildes des genannten Dokumentes mit einer Vergrößerung von im wesentlichen 1:1 auf die Oberfläche einer photographischen Aufnahmetrommel (28), welche genannte Vorrichtung umfaßt,

Beleuchtungs-Abtastmittel (14, 18) zum Abtasten des genannten Dokumentes einschließlich einer Einrichtung zum Bewegen der genannten Abtastmittel von einer Abtaststartzu einer Abtastende-Stellung mit einer ersten Geschwindigkeit $V_s$,

eine Projektionseinrichtung (22), die entlang der optischen Bahn (16) des Systems positioniert und angeordnet ist, von dem genannten Dokument reflektierte Abbilder während des genannten Abtastens zur genannten photographischen Aufnahmetrommel zu projizieren,

eine Reflektoreinrichtung (26), die zwischen der genannten Projektionseinrichtung (22) und der genannten photographischen Aufnahmetrommel (28) positioniert ist, und

Mittel zum Drehen der genannten photographischen Aufnahtrommel (28), so daß ihre Oberfläche sich mit einer zweiten Geschwindigkeit $V_D$ bewegt,

dadurch gekennzeichnet, daß $V_D$ kleiner als $V_s$ ist, und daß die genannte Reflektoreinrichtung angepaßt ist, sich entlang einer bogenförmigen Bahn um die Trommelachse zu bewegen, um die projizierten Abbilder auf die und entlang der Oberfläche der genannten photographischen Aufnahmetrommel in einer Richtung entgegengengesetzt zur Bewegung der genannten Oberfläche im Vorlauf und mit einer Vorlauf-Geschwindigkeit $V_P = V_s - V_D$ zu übertragen, wobei die genannte Reflektoreinrichtung (26) schwenkbar befestigt ist, um die Einfallsachse (30) von projizierten Abbildern im wesentlichen senkrecht zur photographischen Aufnahmeoberfläche während des genannten Abtastens zu halten.

2. Abtastvorrichtung nach Anspruch 1, in welcher die genannten Abtastmittel (14, 18) eine Beleuchtungsquelle (14) und Abtastspiegel (18) umfassen, die gleichzeitig das genannte Dokument (13) in einer linearen Richtung parallel zum genannten Dokument abtasten.

3. Abtastvorrichtung nach Anspruch 1, in welcher die genannten Abtastmittel (14, 18) eine Beleuchtungsquelle (14) und Abtastspiegel (18) aufweisen, die als eine Zusammenbaugruppe verbunden sind, um sich mit der genannten Geschwindigkeit $V_s$ zu bewegen, und in welcher die Vorrichtung einen zweiten Spiegel (20) aufweist, der sich mit einer Geschwindigkeit $V_s/2$ bewegt, um einen konstanten Abstand zwischen dem Dokument und der Projektionseinrichtung aufrechtzuerhalten.

4. Abtastvorrichtung nach irgendeinem der Ansprüche 1 bis 3 mit einer weiteren Reflektoreinrichtung (24) die entlang der optischen Bahn zwischen der genannten Projektionseinrichtung (22) und der genannten Reflektoreinrichtung (26) positioniert ist, wobei die genannte weitere Reflektoreinrichtung (24) zum Umlenken der optischen Bahn angeordnet und angepaßt ist zur Bewegung während des Abtastens, um einen konstanten konjugierten Abstand zwischen der Projektionseinrichtung und der photographischen Aufnahmetrommel aufrechtzuerhalten.

5. Abtastvorrichtung nach Anspruch 1, in welcher eine vorlaufend auf der Trommeloberfläche zurückgelegte Entfernung $D_P$ definiert ist durch die Gleichung

$$D_P = mL_D - V_D T_s, \text{ wobei}$$

$$m = \text{Systemvergrößerung}$$

$$L_D = \text{Länge des abgetasteten Dokuments}$$

$$T_s = \text{Abtastzeit} \left(\frac{L_D}{V_s}\right),$$

und im welcher die für die Rückkehr der genannten Abtastmittel von der Abtastend- zur Abtaststart-Stellung benötigte Zeit $T_r$ höchstens gleich der Zeit ist, welche die genannte Trommeloberfläche zum Durchlaufen der genannten Entfernung $D_P$ benötigt.